# EUROPÄISCHE PATENTSCHRIFT

(11) **EP 0 737 288 B1**
(45) Veröffentlichungstag und Bekanntmachung des Hinweises auf die Patenterteilung: **14.02.2001**
(21) Anmeldenummer: 95933290.9
(22) Anmeldetag: 13.10.1995
(51) Int. Cl.: F21V 9/08, F21V 8/00

(54) **LEUCHTE**
LAMP
LAMPE DECORATIVE

(30) Priorität: 13.10.1994 CH 307394
(43) Veröffentlichungstag der Anmeldung: 16.10.1996
(73) Patentinhaber: Kaiser, Bruno, 4153 Reinach (CH)
(72) Erfinder: Kaiser, Bruno, 4153 Reinach (CH)
(74) Vertreter: Eder, Carl E.
(86) Internationale Anmeldenummer: CH9500238
(87) Internationale Veröffentlichungsnummer: WO9612139

(56) Entgegenhaltungen:
- DE-A- 1 597 950
- US-A- 4 974 136

## Beschreibung

### Technisches Gebiet

Die Ertindung betrifft eine Leuchte.

Diese soll ermöglichen, von mit einer künstlichen Lichtquelle erzeugtem, mehrere Spektralfarben aufweisendem, zum Beispiel mehr oder weniger weissem Licht Lichtstrahlen zu erzeugen, die abhängig von ihrer Richtung und ihrem Ort verschiedene Farben haben.

### Stand der Technik

Aus der DE-A-1 597 950 ist eine Wohnraumleuchte bekannt, die einen Ständer, eine im Ständer angeordnete Lichtquelle und einen Lichtdiffusionskörper besitzt, der am Ständer angebracht ist. Der Lichtdiffusionskörper besteht aus transparentem Giessharz mit inneren Schwindungsrissen und kann eingefärbt sein. Auf diese Weise kann das von der Lichtquelle abgegebene Licht im die Leuchte umgebenden Raum verteilt werden. Dabei ist die Farbe des Lichtes aber nicht von seiner Richtung abhängig.

Die US-A-4 974 136 offenbart eine Leuchte, die eine Glühbirne und zwei verschiedene, dichroitische Filter aufweist, durch die ein Farbmuster erzeugt wird. Das Farbmuster ist dabei durch die Filter vorgegeben und umfasst nur vier verschiedene Farben. Die Verwendung von Filtern zur Erzeugung von Farbmustern hat ferner grosse Intensitätsverluste zur Folge. Des weiteren wirken die je aus einer dünnen, ebenen Platte bestehenden Filter kaum als Lichtverteiler.

Aus der EP-A-0 605 365 bekannte Leuchten weisen eine künstliche Lichtquelle, eine Blende, ein Dispersionsorgan und die vorgängig genannten Teile haltende Haltemittel auf. Das Dispersionsorgan hat zwei durch einen Spalt voneinander getrennte, vollständig aus Glas bestehende Dispersionskörper, die zusammen eine Pyramide mit einer quadratischen, der Lichtquelle zugewandten Grundfläche bilden. Die Blende hat einen zum Spalt parallelen Schlitz. Beim Betrieb der Beleuchtungsvorrichtung wird von der Lichtquelle erzeugtes Licht durch den Schlitz der Blende hindurch auf die an den Spalt des Dispersionsorgans angrenzenden Grenzflächen der beiden Dispersionskörper gestrahlt. Ein Teil dieses Lichts durchdringt die Dispersionskörper und wird in diesem durch Brechung spektral zerlegt, so dass bei den dem Spalt abgewandten, mit den Grenzflächen einen Winkel bildenden Flächen ein Lichtbüschel aus dem Dispersionsorgan herausgestrahlt wird. Jedes dieser Lichtbüschel enthält in die Spektralfarben zerlegtes Licht, das beim Auftreffen auf eine ebene Fläche ein reizvolles regenbogenähnliches Licht-Band mit verschiedenfarbigen Streifen erzeugt.

Bei gewissen Verwendungen der aus der EP-A-0 605 365 bekannten Leuchten wird es jedoch als ungünstig empfunden, dass das von den Dispersionskörpern spektral zerlegte Licht nur auf relativ schmale Bereiche verteilt wird und dementsprechend beim Auftreffen auf eine ebene Fläche Licht-Bänder erzeugt, die nur relativ schmale Farbstreifen haben. Ein gewisser Nachteil dieser bekannten Leuchten besteht zudem darin, dass nur der auf die an den Spalt des Dispersionsorgans angrenzenden Flächen der Dispersionskörper auftreffende Teil des von der Lichtquelle erzeugten Lichtes spektral zerlegt wird.

### Abriss der Erfindung

Der Erfindung liegt die Aufgabe zugrunde, eine Leuchte zu schaffen, die Nachteile der bekannten Leuchten behebt und beim Betrieb verschiedenfarbige Strahlen enthaltendes Licht in mindestens einen sich über einen relativ grossen Raumwinkel erstreckenden Raumbereich und vorzugsweise in mehrere solche Raumbereiche abstrahlt, so dass das Licht beim Auftreffen auf eine beispielsweise kugelförmigen oder ebene Fläche mindestens einen relativ grossen Licht-Fleck mit verschiedenfarbigen Bereichen und/oder grosse, verschiedenfarbige Licht-Flecken erzeugt. Die Leuchte soll dabei einen möglichst grossen Teil des von der Lichtquelle erzeugten Lichts in verschiedene Farben aufweisendes Licht aufteilen und kostengünstig sowie mit einer gefälligen Form herstellbar sein.

Diese Aufgabe wird gemäss der Erfindung gelöst durch eine Leuchte mit den Merkmalen des Anspruchs 1.

Vorteilhafte Ausgestaltungen des Erfindungsgegenstands gehen aus den abhängigen Ansprüchen hervor.

Der Lichtverteiler besitzt gemäss der Erfindung einen aus lichtdurchlässigem Material bestehenden Körper, der den Hauptbestandteil des Lichtverteiler bildet. Dieser Körper ist vorzugsweise einstückig, besteht vorzugsweise aus einem klaren, farblosen, sowie durchsichtigen Glas und wird im folgenden auch als Glaskörper bezeichnet. Der Glaskörper besteht vorzugsweise aus einem mineralischen Glas, das zum Beispiel einen Brechungsindex von 1,532 hat. Wenn der Glaskörper aus mineralischem Glas besteht, kann er zum Beispiel durch Pressen geformt werden, was eine kostengünstige, serienmässige Herstellung ermöglicht.

Der lichtdurchlässige Körper bzw. Glaskörper könnte jedoch eventuell statt aus einem mineralischen Glas aus einem lichtdurchlässigen und vorzugsweise klaren, farblosen sowie durchsichtigen Kunststoff bestehen und dann beispielsweise durch Spritzgiessen geformt werden.

Gemäss der Erfindung ist mindestens ein Abschnitt bzw. Teil der Oberfläche des aus lichtdurchlässigem Material bestehenden Körpers, d.h. des Glaskörpers mit einer Schicht überzogen, die aus einem vom Material des Körpers verschiedenen Material besteht. Diese Schicht ist vorzugsweise im Vergleich zu den charakterischischen Abmessungen des Körpers sehr dünn. Die Form der Oberfläche und die Abmessungen des unbeschichteten, lichtdurchlässigen Körpers sind daher nahezu identisch mit der Form der Oberflächen bzw. den Abmessungen des beschichteten Körpers, d.h. des ganzen Lichtverteilers.

Bei einer vorteilhaften Ausgestaltung der Erfindung ist der Glaskörper und damit auch der Lichtverteiler im wesentlichen polyederförmig. Der Glaskörper und der Lichtverteiler sind dann im wesentlichen durch ebene Flächen begrenzt, von denen jede einen Abschnitt oder Teil der gesamten Oberfläche des Glaskörpers bzw. Lichtverteilers bildet.

Zur Klarstellung der vorgängigen Angaben "im wesentlichen polyederförmig" und "im wesentlichen durch ebene Flächen begrenzt" sei noch angemerkt, dass beispielsweise einige Kanten und/oder Ecken des Polyeders durch abgerundete Übergangsflächen ersetzt sein können. Dies kann insbesondere bei den Verbindungsstellen der Fall sein, bei denen der Lichtverteiler mit den Haltemitteln verbunden ist. Ferner kann der Lichtverteiler eventuell kleine, zu seiner Verbindung mit den Haltemitteln dienende, Kehlen, Rillen, Löcher, Vorsprünge oder dergleichen aufweisen.

Wenn der Glaskörper - wie bereits erwähnt - durch Pressen geformt wird, kann es unter Umständen beim Pressen mit einem ebene Pressflächen aufweisenden Press-Werkzeug geschehen, dass mindestens eine der im Idealfall ebenen Flächen nicht vollständig eben, sondern leicht konkav gebogen wird. Der Glaskörper kann jedoch nötigenfalls nach der Press-Formung noch geschliffen und poliert werden, so dass dann alle Polyeder-Flächen vollkommen eben sind.

Wenn der Glaskörper und der Lichtverteiler im wesentlichen ein Polyeder bilden, ist dieses vorzugsweise konvex, so dass also die Winkel zwischen einander benachbarten, ebenen Flächen des Polyeders - im Innern des Glaskörpers bzw. Lichtverteilers gemessen - spitze Winkel sind.

In diesem Zusammenhang sei noch angemerkt, dass im folgenden unter einem Winkel zwischen Flächen des Lichtverteilers oder Glaskörpers immer der im Innern des Lichtverteilers bzw. Glaskörpers gemessene Winkel gemeint ist, wenn nichts anderes angegeben wird.

Die Oberfläche des Glaskörpers und des Lichtverteilers kann auch mindestens zum Teil gebogen sein. Der Glaskörper und der Lichtverteiler können zum Beispiel im wesentlichen eine Kugel oder einen Kugelabschnitt - beispielsweise ungefähr eine Halbkugel - oder eine Kugelzone oder einen Kugelsektor bilden. Mit "im wesentlichen" ist analog wie bei den Polyedern gemeint, dass gewisse Flächen ein wenig von der Idealform abweichen können und/oder dass eine Kante durch eine runde Übergangsfläche ersetzt ist und/oder dass noch zur Befestigung dienende Rillen, Kehlen, Löcher, Vorsprünge oder dergleichen vorhanden sind.

Der Lichtverteiler ist derart ausgebildet und angeordnet, dass mindestens ein Teil des vom Lichtverteiler abgestrahlten Lichts verschiedene, von seiner Richtung abhängige Farben hat.

Bei einer vorteilhaften Ausgestaltung der Erfindung ist mindestens ein Abschnitt der Oberfläche des Lichtverteilers durch einen unbeschichteten Abschnitt der Oberflächen des Glaskörpers gebildet.

Bei einer vorteilhaften Ausgestaltung der Erfindung ist die bzw. mindestens eine und vorzugsweise jede zur Beeinflussung der Farbe des Lichts dienende Schicht ausgebildet, um bei ihrer Bestrahlung mit Licht von der Umgebung oder vom Innern des Lichtverteilers her durch Interferenzen von der Strahlungsrichtung des Lichts abhängige Farben zu erzeugen.

Die Schicht bzw. mindestens eine der Schichten ist vorzugsweise lichtdurchlässig und zum Beispiel mindestens in einer gewissen Blickrichtung, beispielsweise in einer zur Oberfläche der Schicht senkrechten Blickrichtung, im wesentlichen klar, durchsichtig und farblos.

Die bzw. mindestens eine und beispielsweise jede zur Beeinflussung der Farbe des Lichts dienende Schicht weist mindestens ein vom Glas des Glaskörpers verschiedenes Material auf, das vorzugsweise einen anderen Brechungsindex besitzt als das den Glaskörper bildende Glas. Die bzw. mindestens eine oder jede Schicht kann zum Beispiel zwei oder mehr abwechselnd aufeinanderfolgende Lagen oder Teil-Schichten aufweisen, die aus verschiedenen, lichtdurchlässigen, vorzugsweise dielektrisch Materialien mit verschiedenen Brechungsindizes bestehen. Jede Schicht weist vorzugsweise mindestens drei Lagen und eventuell mindestens fünf Lagen und zum Beispiel bis ungefähr zehn Lagen von jedem von zwei verschiedenen Materialien auf. Die abwechselnd aufeinanderfolgenden Lagen einer Schicht können zum Beispiel aus verschiedenen Oxiden bestehen. Die einen Lagen können zum Beispiel aus Titanoxid, genauer gesagt, Titan(II)-Oxid bestehen. Die anderen Lagen können dann zum Beispiel aus Siliciumoxid, nämlich aus Siliciummonoxid und/oder Siliciumdioxid bestehen. Dabei besteht die unterste und die oberste Lage vorzugsweise aus Titanoxid. Der Glaskörper kann zum Beispiel durch Bedampfen in einer evakuierten Kammer beschichtet, d.h. mit den Schichten versehen werden. Dabei kann zum Beispiel Titan bzw. Silicium verdampft, auf dem warmen, d.h. eine oberhalb der normalen Raumtemperatur liegenden Glaskörper abgelagert und mit dem in der evakuierten Kammer noch vorhandenen Sauerstoff oxidiert werden.

Eventuell kann man auch vorsehen, dass die bzw. jede zur Beeinflussung der Farbe durch Interferenzen dienende Schicht statt der Lagen aus den angegebenen Materialien oder zusätzlich zu diesen noch mindestens eine Lage aus einem andern Material, beispielsweise einem andern Metalloxid oder eventuell eine sehr dünne, lichtdurchlässige Lage aus einem Metall aufweist.

Die Beschichtung kann eventuell derart durchgeführt werden, dass die Dicke der Lagen und/oder die sonstige Struktur und/oder Zusammensetzung abhängig vom Ort variiert, so dass auch die erzeugten Interferenzfarben ortsabhängig variieren.

Die Dicken der einzelnen Lagen betragen vorzugsweise höchstens 0,005 mm und zum Beispiel höchstens oder ungefähr 0,001 mm. Die Dicke der gesamten Schicht beträgt vorzugsweise höchstens 0,01 mm.

Die Oberfläche des Glaskörpers kann eventuell noch einen Flächenabschnitt aufweisen, der mit einem metallischen, lichtundurchlässigen Überzug verspiegelt ist. Falls ein solcher Überzug vorhanden ist, soll er jedoch höchstens einen Teil der Oberfläche des Glaskörpers bedecken. Ferner ist der allenfalls vorhandene, lichtundurchlässige Überzug vorzugsweise auf der der Lichtquelle abgewandten Seite des Glaskörpers oder seitlich von einem von der Lichtquelle in den Glaskörper eingestrahlten Lichtbüschel angeordnet.

### Kurze Beschreibung der Zeichnungen

Der Erfindungsgegenstand wird anschliessend anhand in der Zeichnung dargestellter Ausführungsbeispiele näher erläutert. In der Zeichnung zeigt
die Fig. 1 eine Schrägansicht einer Leuchte,
die Fig. 2 eine Ansicht vom oberen Teil der Leuchte in einer anderen Blickrichtung,
die Fig. 3 eine Ansicht vom oberen Teil der Leuchte in noch einer anderen Blickrichtung,
die Figuren 4 - 10 Ansichten vom oberen Teil von Leuchten mit anderen Lichtverteilern und
die Fig. 10 einen Schnitt durch eine in einen Tisch integrierte Leuchte.

### Beschreibung der bevorzugten Ausführungsbeispiele

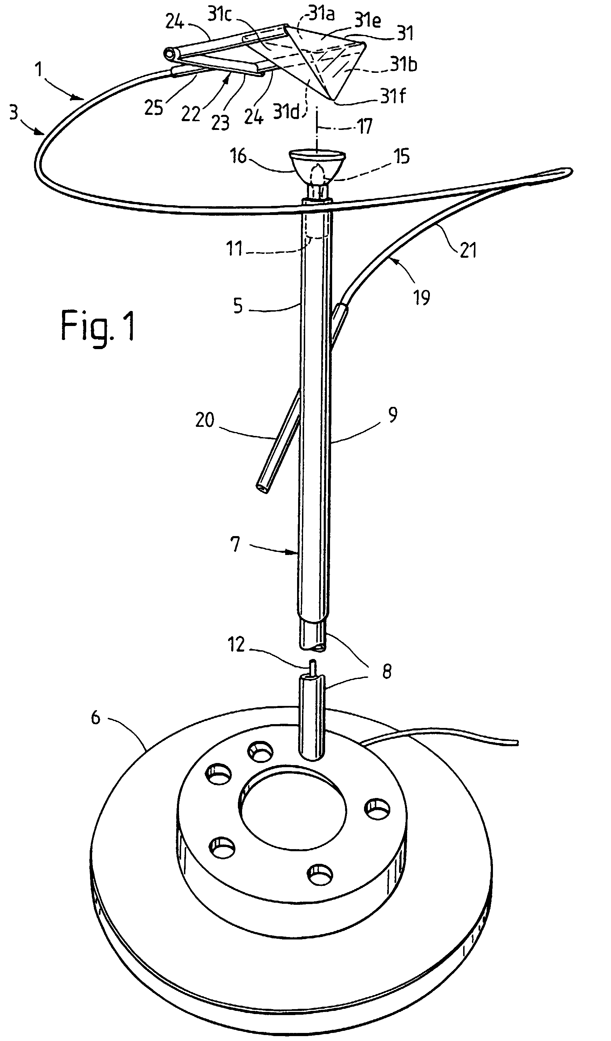

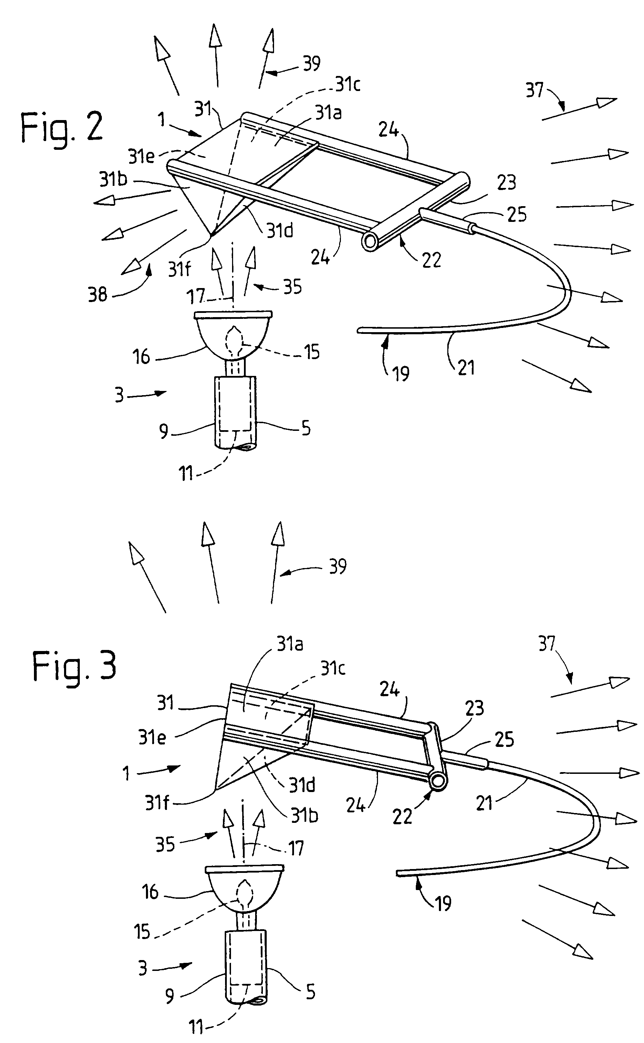

Die in der Fig. 1 und zum Teil in den Figuren 2, 3 ersichtliche Leuchte 1 - nämlich Steh-Leuchte - besitzt Haltemittel 3 mit einem ständerförmigen, im wesentlichen starren Support 5. Dieser weist einen zum Beispiel auf einem Fussboden stehenden Sockel 6 auf, der aus einer kreisringförmigen Scheibe, nämlich zum Beispiel einer metallischen, aus Stahl bestehenden alten, benutzten Bremsscheibe eines Automobils besteht. Der Support 5 besitzt ferner eine hohle, vertikale Stange 7 mit einem starr am Sockel 6 befestigten, unteren, dünneren Rohr 8 und einem oberen, dickeren Rohr 9. Die beiden Rohre bestehen zum Beispiel aus einem metallischen Material, nämlich Stahl. Eine im und/oder am oberen Ende des oberen Rohres 9 befestigte Halterung 11 besitzt zum Beispiel einen im oberen Rohr 9 angeordneten Körper aus elektrisch isolierendem Material und zwei elektrisch leitende Kontaktbuchsen. Die letzteren sind mit einem elektrischen Kabel 12 verbunden, das durch die hohle Stange 7 verläuft und beim Sockel 6 aus dem Support 5 herausgeführt ist. Ferner ist ein nicht sichtbarer, elektrischer, zum Beispiel zwischen Stücken des Kabels 12 ausserhalb des Supports 5 oder im Sockel 6 angeordneter Transformator vorhanden. Das der Halterung 11 abgewandte Ende des Kabels 12 kann für die Benutzung der Leuchte zum Beispiel über Steck-Verbindungsmittel mit dem elektrischen Wechselspannungsnetz verbunden werden.

Eine künstliche Lichtquelle 15 besitzt eine elektrische Lampe, nämlich eine Halogenglühlampe, die mit einer höchstens 50 V und zum Beispiel 12 V betragenden, elektrischen Spannung betrieben werden kann. Die Lichtquelle 15 hat einen Sockel mit zwei elektrischen Kontaktstiften, die wegnehmbar in die Kontaktbuchsen der Halterung 11 gesteckt sind. Ein Hohlspiegel 16 bildet Kollimationsmittel, ist unlösbar am Sockel der Lichtquelle 15, befestigt, umschliesst den Glaskolben der Lichtquelle in zur letzteren axialer Blickrichtung und besteht zum Beispiel aus einer Kunststoff-Schale mit einer metallisierten Innenfläche. Der Hohlspiegel 16 definiert eine vorzugsweise mit der Achse der Stange 7 zusammenfallende Achse 17 und ist zum Beispiel ungefähr paraboloidförmig sowie im wesentlichen rotationssymmetrisch zur Achse 17, wobei aber die metallische, reflektierende Innenfläche des Hohlspiegels zum Beispiel aus einer Vielzahl von kleinen, ebenen Flächenabschnitten zusammengesetzt ist. Der Hohlspiegel bildet Kollimationsmittel, um das beim Betrieb von der Lichtquelle 15 erzeugte Licht zu kollimieren.

Die Haltemittel 3 weisen noch ein an der Stange 7 befestigtes Verbindungselement 19 aut. Dieses besitzt eine metallische, am oberen Rohr 9 befestigte, zum Beispiel angeschweisste Hülse 20 und einen aus Stahl bestehenden Draht 21, dessen unteres Ende in der Hülse 20 steckt und mit dieser verschweisst ist. Der Draht 20 ist mehr oder weniger wendelförmig und bildet ungefähr und/oder mindestens eine Windung, welche die Stange 67 und die Achse 17 umschliesst. Das Verbindungselement 19 besitzt noch einen metallischen, ungefähr U-förmigen Halter 22 mit einem geraden Steg 23 und zwei geraden, rechtwinklig vom letzteren wegragenden, zueinander parallelen Schenkeln 24, die starr mit dem Steg 23 verbunden, nämlich verschweisst sind. Am Steg 23 ist in dessen Mitte eine Hülse 25 befestigt, zum Beispiel angeschweisst. Das obere Ende des Drahtes 21 steckt in der Hülse 25 und ist mit dieser verbunden, zum Beispiel verschweisst. Der Draht 20 ist sowohl elastisch als auch plastisch deformierbar, so dass er den Halter 21 sowohl federnd als auch verstellbar mit dem ständerförmigen Support 3 verbindet. Die beiden Schenkel 24 haben einen an den Steg 23 anschliessenden, hülsenförmigen Abschnitt und einen dem Steg abgewandten, rinnenförmigen Abschnitt. Die im Querschnitt offenen Seiten der rinnenförmigen Abschnitte der beiden Schenkel 24 sind einander zugewandt.

Die Leuchte 1 besitzt einen Lichtverteiler 27. Dieser hat im wesentlichen die Form eines Polyeders und nämlich mindestens annähernd die Form einer Pyramide mit einer annähernd oder genau ebenen, glatten Grundfläche 31a. Diese ist rechteckförmig und hat dementsprechend zwei kürzere Ränder bzw. Seiten und zwei längere Ränder bzw. Seiten. Der Lichtverteiler hat vier annähernd oder genau ebene, glatte Seitenflächen, nämlich eine erste sowie eine zweite, schmälere Seitenfläche 31b bzw. 31c und eine erste sowie eine zweite, breitere Seitenfläche 31d bzw. 31e. Jede der beiden schmäleren Seitenflächen 31b, 31c ist über eine ebene und/oder abgerundete, einen schmalen, zur Grundfläche 31a parallelen Streifen bildende Übergangsfläche mit einem der kürzeren Ränder der Grundfläche 31a verbunden. Die beiden schmäleren Seitenflächen 31b, 31c bilden mit der Grundfläche 31a einen spitzen Winkel und sind zueinander spiegelsymmetrisch bezüglich einer rechtwinklig auf der Grundfläche 31a stehenden, in der Mitte von dieser zwischen den beiden kürzeren Rändern der Grundfläche 31a hindurch verlaufenden Symmetrieebene. Die eine, erste, breitere Seitenfläche 31d stösst beim einen, ersten längeren Rand der Grundfläche 31a an diese an und bildet mit dieser einen spitzen Winkel. Die von den Seitenflächen 31b, 31c, 31d mit der Grundfläche 31a gebildeten, spitzen Winkel sind alle gleich gross, betragen mindestens 10°, höchstens 80°, vorzugsweise 30° bis 60° und zum Beispiel ungefähr oder genau 45°. Die zweite, breitere Seitenfläche 31e stösst beim zweiten, längeren Rand der Grundfläche 31a an diese an und bildet mit der Grundfläche 31 einen rechten Winkel. Im übrigen bildet selbstverständlich jede Seitenfläche mit jeder anderen Seitenfläche einen Winkel.

Der Lichtverteiler 31 hat bei seinem der Grundfläche 31a abgewandten Scheitel 31f zum Beispiel anstelle einer punktförmigen Spitze eine im Vergleich zur Grundfläche 31a sehr kleine, ebene oder abgerundete Deckfläche und/oder eventuell eine im Vergleich zu den Rändern der Grundfläche 31a sehr kurze, mindestens zum Teil gerade sowie zur Grundfläche parallele und/oder mindestens zum Teil gebogene Kante. Die Verlängerungen der vier zwischen einander paarweise benachbarten Seitenflächen des Lichtverteilers vorhandenen, geraden Kanten können sich zum Beispiel in ein und demselben Punkt, der fiktiven Spitze der Pyramide treffen. Es ist jedoch auch möglich, dass sich die beiden die erste, breitere Seitenfläche 31d von den schmäleren Seitenflächen 31b, 31c trennenden Kanten und die beiden die zweite, breitere Seitenfläche 31e von den schmäleren Seitenfläche trennenden Kanten oder die Verlängerungen der beiden Paare von Kanten bei zwei verschiedenen Punkten treffen, deren Abstand dann jedoch wesentlich kleiner ist als die Längen der genannten Kanten und als die Längen der Ränder der Grundfläche 31a ist. Die Grundfläche 31a und die vier Seitenflächen 31b, 31c, 31d, 31e definieren also eventuell nicht genau, aber doch mindestens annähernd und im wesentlichen eine Pyramide.

Der Lichtverteiler 31 besitzt als Hauptbestandteil einen lichtdurchlässigen Körper, nämlich einen einstückigen Glaskörper aus einem mineralischen Glas. Dieses ist klar, farblos sowie durchsichtig.

Der lichtdurchlässige Körper, d.h. Glaskörper ist bei mindestens einer Fläche und vorzugsweise bei zwei oder noch mehr Flächen des Lichtverteilers 31 mit einer dünnen, lichtdurchlässigen, zur Erzeugung von Interferenz färben dienenden Schicht überzogen. Der Glaskörper ist zum Beispiel bei den drei mit der Grundfläche 31a einen spitzen Winkel bildenden Seitenflächen 31b, 31c, 31d mit einer solchen Schicht überzogen. Jede dieser Schichten kann zum Beispiel - wie in der Einleitung beschrieben - mehrere abwechselnd aufeinanderfolgende Lagen oder Teil-Schichten aus Titanoxid bzw. Siliciumoxid aufweisen.

Die entlang den zwei kürzeren Rändern der Grundfläche 31a verlaufenden, zwischen der letzteren und den schmäleren Seitenflächen 31b, 31c vorhandenen, streifenförmigen Übergangsflächen ragen in die von den Schenkeln 24 des Halters 22 gebildeten Rinnen hinein. Der Lichtverteiler 31 ist zum Beispiel bei den beiden kürzeren Rändern der Grundfläche 31 lösbar in den etwas federnden Schenkeln 24 des Halters 22 festgeklemmt. Der Lichtverteiler 31 kann jedoch eventuell noch mit Hilfe eines Klebstoffs mit dem Halter verbunden sein.

Der Scheitel 31f des Lichtverteilers 31 und die fiktive Spitze der vom Lichtverteiler definierten Pyramide befindet sich unterhalb des Halters 22 sowie der Grundfläche 31a des Lichtverteilers 31 bzw. der Pyramide und ist mehr oder weniger der Lichtquelle 15 und dem Hohlspiegel 16 zugewandt. Der Scheitel 31f befindet sich oberhalb des Hohlspiegels 16 in Abstand von der durch dessen Rand definierten, horizontalen Ebene. Dieser Abstand beträgt vorzugsweise mindestens 20% vorzugsweise höchstens 200% und zum Beispiel 50% bis 100% des maximalen Innendurchmessers des Hohlspiegels 16. Der Lichtverteiler 31 sitzt ferner derart im Halter 22, dass seine erste, breitere Seitenfläche 31d dem Steg 23 gegenübersteht.

Die beiden kürzeren, zu den Schenkeln 24 parallelen Ränder der Grundfläche 31a sind zum Steg 23 hin nach unten geneigt und bilden mit der vertikalen, durch den Hohlspiegel definierten Achse 17 einen von 90° verschiedenen, zum Beispiel ungefähr 75° bis 85° betragenden Winkel. Die beiden längeren, zu den Schenkeln 24 rechtwinkligen Ränder der Grundfläche 31a bilden mit der vertikalen Achse 17 ebenfalls einen von 90° verschiedenen, zum Beispiel 60° bis 75° betragenden Winkel. Die beiden schmäleren Seitenflächen 31b, 31c und die erste, breitere Seitenfläche 31d sind der zur Achse 17 rechtwinkligen, horizontalen, sich an den Rand des Hohlspiegels 16 anschmiegenden Ebene zugewandt und bilden mit einer zur Achse 17 parallelen, vertikalen Geraden einen spitzen Winkel. Die zweite, breitere Seitenfläche 31e ist dementsprechend nicht vertikal, sondern von einer sich beim Scheitel 31f an sie anschmiegenden Vertikalen nach oben weggeneigt. Die zweite, breitere Seitenfläche 31e befindet sich also auf derjenigen Seite des Lichtverteilers 31, die der sich an den Rand des Hohlspiegels anschmiegenden, horizontalen Ebene abgewandt ist. Die zweite, breitere Seitenfläche bildet mit der vertikalen Achse 17 einen Winkel, der zum Beispiel ungefähr 5° bis 20° beträgt. Der Lichtverteiler 31 ist zum Beispiel derart angeordnet, dass die Achse 17 - von der Lichtquelle 15 her - bei der ersten, breiteren Seitenfläche 31d in den Lichtverteiler 31 eindringt und dass sich der Scheitel 31f - in zur Achse 17 paralleler Projektion - innerhalb des Hohlspiegels befindet. Dementsprechend kann beim Betrieb von der Lichtquelle 15 erzeugtes Licht direkt und auch vom Hohlspiegel reflektiertes Licht von der Aussenseite bzw. Umgebung des Lichtverteilers 31 her auf die erste, breitere Seitenfläche 31d gestrahlt werden. Ferner kann auch Licht direkt von der Lichtquelle 15 und vom Hohlspiegel 16 reflektiertes Licht von aussen auf die erste, schmälere Seitenfläche 31b und eventuell auch auf die zweite, schmälere Seitenfläche 31c gestrahlt werden. Die zweite, breitere Seitenfläche 31e wird dagegen von aussen her höchstens mit von einem Randbereich des Hohlspiegels reflektiertem Licht, aber nicht mit direkt von der Lichtquelle 15 kommendem Licht bestrahlt. Die Grundfläche 31 befindet sich auf der der Lichtquelle 15 und dem Hohlspiegel 16 abgewandten Seite des Lichtverteilers 31 und wird daher von aussen her weder mit direkt von der Lichtquelle kommendem noch mit vom Hohlspiegel reflektiertem Licht bestrahlt.

Die die Lichtquelle 15 bildende Halogenglühlampe hat eine Drahtwendel, die beim Betrieb zum Beispiel mindestens im zentralen Bereich auf eine ungefähr und/oder mindestens 3000° C betragende Temperatur erhitzt wird. Die Lichtquelle 15 erzeugt beim Betrieb verschiedene Spektralfarben enthaltendes, beispielsweise mehr oder weniger weisses Licht. Dieses Licht wird vom Hohlspiegel 16 kollimiert, so dass die Lichtquelle 15 und der Hohlspiegel 16 ein in der Fig. 3 schematisch durch Pfeile angedeutetes Lichtbüschel 35 gegen den Lichtverteiler 31 strahlen. Dieses Lichtbüschel 35 enthält und umschliesst die Achse 17, ist im wesentlichen rotationssymmetrisch zur letzteren und liegt zu einem grossen Teil innerhalb eines vom Hohlspiegel 16 definierten Kegels. Das Lichtbüschel 35 hat dementsprechend eine mit der Achse 17 zusammenfallende Strahlungsmittelachse. Mindestens der grösste Teil des von der Lichtquelle erzeugten und von aussen her gegen den Lichtverteiler gestrahlten Lichts trifft bei Flächen auf den Lichtverteiler, die mit zur Achse 17 sowie zur Strahlungsmittelachse des Lichtbüschels 35 parallelen Geraden einen von 90° verschiedenen, spitzen Winkel bilden. Dementsprechend wird mindestens der grösste Teil des gegen den Lichtverteiler gestrahlten Lichts beim Eindringen in diesen gebrochen und/oder durch Reflexion in eine mit der Achse 17 einen Winkel bildende Richtung reflektiert.

Das von der Aussenseite und/oder Umgebung des Lichtverteilers 31 her auf die erste, breitere Seitenfläche 31d gestrahlte Licht wird zum Teil an den Grenzflächen zwischen den verschiedenen Lagen der auf der ersten, breiteren Seitenfläche 31d vorhandenen Schicht und auch bei den an die Umgebung und an den Glaskörper angrenzenden Grenzflächen dieser Schicht reflektiert und bei der Seitenfläche 31d wieder in die Umgebung zurückgestrahlt. Dabei finden auch Mehrfach-Reflexionen, d.h. Zickzack-Reflexionen, und Interferenzen statt. Ein anderer Teil des von aussen auf die erste, breitere Seitenfläche 31d gestrahlten Lichts passiert die bei der Seitenfläche 31d vorhandene Schicht und wird aber in dieser zum Teil zuerst hin und her reflektiert, wobei ebenfalls Interferenzen stattfinden. Das von aussen her durch die Schicht hindurch gelangende Licht dringt dann in den Glaskörper des Lichtverteilers 31 ein und wird dabei gebrochen. Dieses Licht wird dann durch den Glaskörper hindurch zu mindestens einer anderen Fläche des Lichtverteilers 31 gestrahlt und kann zum Beispiel bei dieser Fläche zum Teil aus dem Lichtverteiler heraus in die Umgebung gestrahlt und zum Teil wieder in den Glaskörper hinein reflektiert werden. Das von aussen in den Glaskörper hineingestrahlte Licht durchdringt diesen also einmal oder mehrmals und wird danach - abgesehen von einem möglicherweise kleinen, absorbierten Teil - durch eine der Flächen des Lichtverteilers 31 in dessen Umgebung gestrahlt. Analoges gilt für das direkt von der Lichtquelle 15 und/oder über den Hohlspiegel 6 zur ersten, schmäleren Seitenfläche 31b und eventuell zur zweiten, schmäleren Seitenfläche 31c sowie eventuell zur zweiten, breiteren Seitenfläche 31e gestrahlte Licht. Die von einer Schicht verursachten Interferenzen haben zur Folge, dass das von der Schicht reflektierte und das diese durchdringende Licht in Lichtstrahlen mit verschiedenen Farben zerlegt wird. Die Farbe ist dabei von den Richtungen abhängig, in denen das Licht zur Schicht gestrahlt und von dieser weggestrahlt wird. Das vom Lichtverteiler 31 weggestrahlte Licht hat infolge der durch die Schichten verursachten Interferenzen und den in Kombination mit diesen bei den verschiedenen Flächen des Glaskörpers stattfindenden Brechungen sowie Reflexionen zu einem grossen Teil eine von der Abstrahlungsstelle und/oder von der Abstrahlungsrichtung abhängige Farbe. Zum Beispiel wird bei der ersten, breiteren Seitenfläche 31 ein in den Figuren 2, 3 durch Pfeile dargestelltes, lichtstarkes und farbstarkes Lichtbüschel 37 abgestrahlt, dessen am steilsten schräg nach unten gerichteter Teil rötliche und orange, langwellige Farben des Lichtspektrums hat. Die Farben gehen bis zum geneigt nach oben gestrahlten Teil des Lichtbüschels 37 in bläuliche und violette, kurzwellige Farben des Lichtspektrums über. Ferner wird von der ersten, schmäleren Seitenfläche 31c ein in der Fig. 2 angedeutetes Lichtbüschel 38 abgestahlt. Dieses erstreckt sich von einem Bereich mit relativ stark nach unten geneigter Strahlungsrichtung bis zu einem Bereich mit leicht aufwärts geneigter Stahlungsrichtung und enthält ebenfalls Teile bzw. Strahlen mit verschiedenen Farben. Des weiteren wird bei der Grundfläche 31a sowie auch noch bei den Seitenflächen 31c und 31e ein steil und teilweise senkrecht nach oben gerichtetes, in den Figuren 2, 3 dargestelltes Lichtbüschel 39 abgestrahlt, das teilweise aus weissem Licht besteht, aber auch Teile bzw. Strahlen mit unterschiedlichen Farben enthält.

Die unterschiedliche Farben aufweisenaen Teile oder Strahlen des Lichtbüschels 37 nehmen Bereiche ein, die sich über einen relativ grossen Raumwinkel erstrecken. Wenn mit dem Lichtbüschel 37 eine kugelförmige Beleuchtungs-Fläche mit einem im Lichtverteiler 31 liegenden Kugel-Zentrum oder eine ebene, ungefähr zur mittleren Strahlungsrichtung des Lichtbüschels 37 rechtwinklige Beleuchtungs-Fläche beleuchtet wird, erzeugt das Lichtbüschel 37 auf dieser kugelförmigen oder ebenen Beleuchtungs-Fläche verschiedene Farben aufweisende Licht-Flecken, die in allen in der Fläche liegende Richtungen grosse Ausdehnungen haben. Das Lichtbüschel 38 enthält ebenfalls verschiedenfarbige Teile, die sich über einen noch ziemlich grossen Raumwinkel erstrecken. Dementsprechend erzeugt das Lichtbüschel 38 beim Beleuchten einer kugelförmigen oder ebenen, analog zu den vorgängig beschriebenen Beleuchtungs-Flächen angeordneten Beleuchtungs-Fläche farbige Licht-Flecken, die in allen in der Beleuchtungs-Fläche liegenden Richtungen noch ziemlich grosse Abmessungen haben. Das Teile mit weisslichem und Teile mit buntem Licht enthaltende Lichtbüschel 39 erstreckt sich ebenfalls über einen grossen Raumwinkel. Die farbigen Teile des Lichtbüschels 39 ergeben beim Beleuchten einer Beleuchtungs-Fläche der genannten Art zum Teil rundliche Flecken und zum Teil bandförmige, regenbogenartige Licht-Spektren.

Die Leuchte ergibt also eine vielfarbige, unterschiedliche Farbmuster autweisende Beleuchtung von sie umgebenden Flächen. Da der Lichtverteiler 31 durch den ungefähr wendelförmigen Draht 21 des Verbindungselementes 19 federnd mit dem ständerförmigen Support 5 verbunden ist, kann ein Benutzer der Leuchte 1 zudem manuell den Halter 22 und den von diesem gehaltenen Lichtverteiler 31 vorübergehend auslenken und dadurch Schwingungen des Lichtverteilers 31 auslösen. Dieser führt dann während einer gewissen, zum Beispiel mindestens eine Minute betragenden Zeitdauer langsam abklingende Schwingungen aus, während denen sich die Licht- und Farbverteilung periodisch ändert. Ferner kann ein Benutzer der Leuchte 1 durch plastisches Verformen des Drahtes 21 auch die vom Lichtverteiler 31 im Ruhezustand eingenommene Lage verändern und dadurch eine von der beschriebenen Licht- und Farbverteilung abweichenden Verteilung des Lichts und der Farben bewirken.

Wenn der Lichtverteiler 31 lösbar im Halter 22 gehalten ist, kann ein Benutzer der Leuchte 1 ferner den Lichtverteiler 31 um einen Winkel von 180° um eine zur Grundfläche 31a rechtwinklige Achse verschwenken, wodurch die Licht- und Farbverteilung ebenfalls verändert werden kann. Schliesslich besteht sogar die Möglichkeit, den Lichtverteiler 31 um einen Winkel von 180° um eine in der Grundfläche 31a liegende, zum Beispiel zu den Schenkeln 24 parallele Achse zu verschwenken, so dass der Scheitel 31f des Lichtverteilers 31 dann nach oben von der Lichtquelle 15 weg gerichtet ist. In diesen sich durch Verschwenken des Lichtverteilers bezüglich des Halters ergebenden Stellungen des Lichtverteilers wird dann mehr weissliches und weniger buntes Licht abgestrahlt als in der Stellung gemäss den Figuren 1 bis 3.

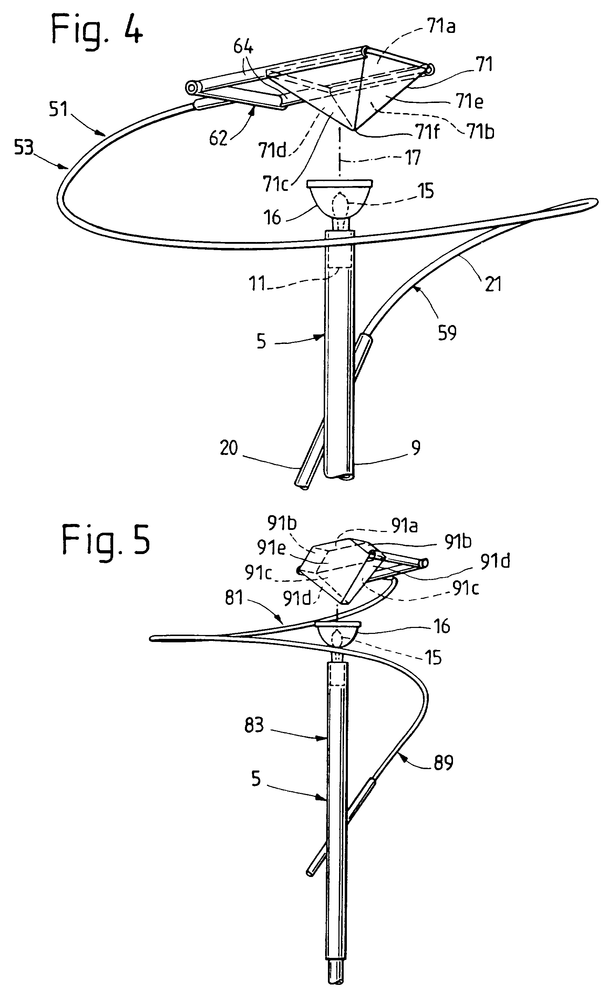

Die zum Teil in der Fig. 4 ersichtliche Leuchte 51 besitzt Haltemittel 53 mit einem ständerförmigen Support 5, der gleich wie der Support der Leuchte 1 ausgebildet ist. Die Leuchte 51 besitzt eine Lichtquelle 15 und einen eine Achse 17 definierenden Hohlspiegel 16. Die Teile 15, 16 sind ebenfalls gleich ausgebildet wie bei der Leuchte 1. Die Haltemittel 53 weisen ein Verbindungselement 59 auf, das gleich wie das Verbindungselement 19 eine am oberen Rohr 9 des Supports 5 befestigte Hülse 20 sowie einen Draht 21 besitzt. Am oberen Ende des letzteren ist ein Halter 62 befestigt. Dieser unterscheidet sich vom Halter 22 dadurch, dass seine mit 64 bezeichneten Schenkel Rinnen aufweisen, die im Vergleich zum Abstand der Schenkel länger sind als beim Halter 24.

Der Halter 62 hält einen Lichtverteiler 71. Dieser hat im wesentlichen die Form einer Pyramide mit einer quadratischen Grundfläche 71a. Der Lichtverteiler 71 hat vier Seitenflächen 71b, 71c, 71d, 71e, die sich paarweise gegenüberstehen, spiegelsymmetrisch bezüglich zwischen ihnen hindurch verlaufenden, zur Grundfläche 71a rechtwinkligen Symmetrieebenen sind und mit der Grundfläche 71a alle den gleichen spitzen, zum Beispiel ungefähr 45° betragenden Winkel bilden. Der zum Beispiel durch eine kleinere ebene und/oder gebogene Deckfläche oder die Pyramiden-Spitzen gebildete Scheitel 71f des Lichtverteilers 71 befindet sich auf der Mittelsenkrechten der Grundfläche 71a und ragt von dieser weg nach unten gegen den Hohlspiegel 16. Die Achse 17 dringt von der Lichtquelle 15 her zum Beispiel bei der Seitenfläche 71d in den Lichtverteiler 71 ein. Der Lichtverteiler 71 besteht wiederum aus einem Glaskörper, von dem mindestens eine Fläche und vorzugsweise mehrere Flächen mit einer mehrere Lagen aufweisenden Schicht überzogen ist. Der Glaskörper kann zum Beispiel bei den drei Seitenflächen 71b, 71c, 71d und eventuell auch noch bei der Seitenfläche 71e mit einer Schicht überzogen sein, welche die betreffende Seitenfläche bildet.

Wenn die Lichtquelle 15 Licht erzeugt, werden die beiden Seitenflächen 71b sowie 71d mit direkt von der Lichtquelle 15 kommendem und mit vom Hohlspiegel reflektiertem Licht bestrahlt. Ferner wird noch mindestens ein wenig vom Hohlspiegel reflektiertes Licht zu den restlichen Seitenflächen 71c und 71e gestrahlt. Der Lichtverteiler 71 strahlt dann Licht ab, das mindestens zum Teil von der Abstrahlungsstelle und von der Abstrahlungsrichtung abhängige Farben hat.

Die teilweise in der Fig. 5 gezeichnete Leuchte 81 besitzt Haltemittel 83 mit einem ständerförmigen Support 5, der gleich wie bei den vorher beschriebenen Leuchten 1 und 51 ausgebildet ist und eine Lichtquelle 15 sowie einen Hohlspiegel 16 hält. Das zu den Haltemitteln 83 gehörende Verbindungselement 89 ist ähnlich wie die vorher beschriebenen Verbindungselemente 19 und 59 ausgebildet und besitzt an seinem oberen Ende einen Halter, der einen Lichtverteiler 91 hält. Dieser besitzt mehrere ebene Flächen und hat im wesentlichen die Form eines Polyeders. Dieses besitzt acht Flächen und ist aus einem Würfel gebildet, den eine Kante und eine der dieser gegenüberstehenden Ecken abgeschnitten wurde. Der Lichtverteiler 91 ist derart angeordnet, dass die durch Abschneiden einer Kante des Würfels entstandene, rechteckförmige Fläche 91a analog wie die Grundfläche 31a, 71a des Lichtverteilers 31 bzw. 71 der Lichtquelle 15 abgewandt ist. Ferner sind auch die beiden an die Längsränder der Fläche 91a anstossenden, ebenfalls rechteckförmigen Flächen 91b der Lichtquelle abgewandt. Die durch Abschneiden einer Ecke des Würfels gebildete, dreieckförmige Fläche 91c und mindestens eine der beiden an Ränder von dieser Fläche 91c anstossenden, durch Teile von ursprünglichen Würfelflächen gebildeten trapezförmigen Flächen 91d kann dann von aussen her mit von der Lichtquelle erzeugtem Licht bestrahlt werden. Die vom Rest einer Würfelfläche gebildete, fünfeckförmige Fläche 91e kann eventuell auch noch mit von aussen her einfallendem Licht bestrahlt werden. Der Lichtverteiler 91 besteht wiederum aus einem Glaskörper, der mindestens eine mit einer Schicht überzogene Fläche und beispielsweise mehrere mit einer lichtdurchlässigen Schicht überzogene und der Lichtquelle zugewandte Flächen hat. Man kann zum Beispiel die Flächen 91c, 91d mit einer lichtdurchlässigen, Interferenzen erzeugenden Schicht versehen, welche das von aussen auf sie gestrahlte Licht zum Teil reflektiert und zum Teil passieren lässt. Wenn der Lichtverteiler 91 mit von der Lichtquelle 15 erzeugtem Licht bestrahlt wird, strahlt er Licht ab, das wiederum mindestens zum Teil verschiedene, von der Abstrahlungsstelle und/oder der Abstahlungsrichtung abhängige Farben hat.

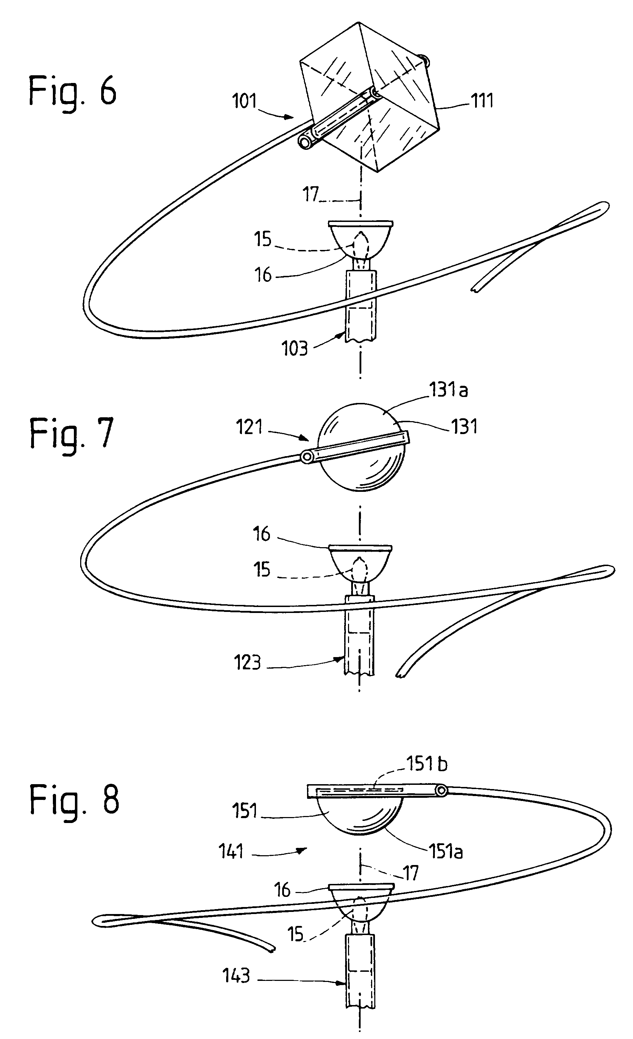

Die zum Teil in der Fig. 6 ersichtliche Leuchte 101 besitzt Haltemittel 103, die eine Lichtquelle 15, einen Hohlspiegel 16 und einen Lichtverteiler 111 halten. Der letztere hat im wesentlichen die Form eines Parallelepipeds und ist zum Beispiel würfelförmig, könnte aber stattdessen quaderförmig sein. Der Lichtverteiler 111 besitzt bei zwei oder drei seiner ebenen Flächen eine lichtdurchlässige, zur Erzeugung von Interferenzen dienende Schicht, wobei diese Flächen mehr oder weniger der Lichtquelle zugewandt sind.

Die in der Fig. 7 gezeichnete Leuchte 121 besitzt eine Lichtquelle 15, einen Hohlspiegel 16, Haltemittel 123 und einen Lichtverteiler 131 mit einer im wesentlichen kugelförmigen Oberfläche 131a. Diese hat einen mit einer lichtdurchlässigen, zur Interferenzerzeugung dienenden Schicht versehenen Flächenabschnitt, der zum Beispiel ungefähr die der Lichtquelle zugewandte Hälfte der Oberfläche 131a bildet.

Die in der Fig. 8 gezeichnete Leuchte 141 besitzt eine Lichtquelle 15, einen Hohlspiegel, Haltemittel 143 und einen Lichtverteiler 151. Dieser hat im wesentlichen die Form eines Kugelabschnitts, der zum Beispiel ungefähr eine Halbkugel bildet oder kleiner als eine solche ist. Die Oberfläche des Lichtverteilers 151 hat eine konvex gebogene Fläche 151a und eine ebene Fläche 151b. Die gebogene Fläche 151a ist mindestens zum Teil durch eine zur Interferenzerzeugung dienende, lichtdurchlässige Schicht gebildet und der Lichtquelle 15 zugewandt. Die ebene Fläche 151b ist durch eine unbeschichtete Fläche des Glaskörpers des Lichtverteilers gebildet. Das von der Lichtquelle erzeugte und von aussen her gegen die Oberfläche des Lichtverteilers gestrahlte Licht trifft mindestens zum grössten Teil auf gebogene Flächenabschnitte des Lichtverteilers auf, die mit einer zur Achse 17 und zur Strahlungsmittelachse des gegen den Lichtverteiler 151 gestrahlten Lichtbüschels einen von 90° verschiedenen Winkel bildet.

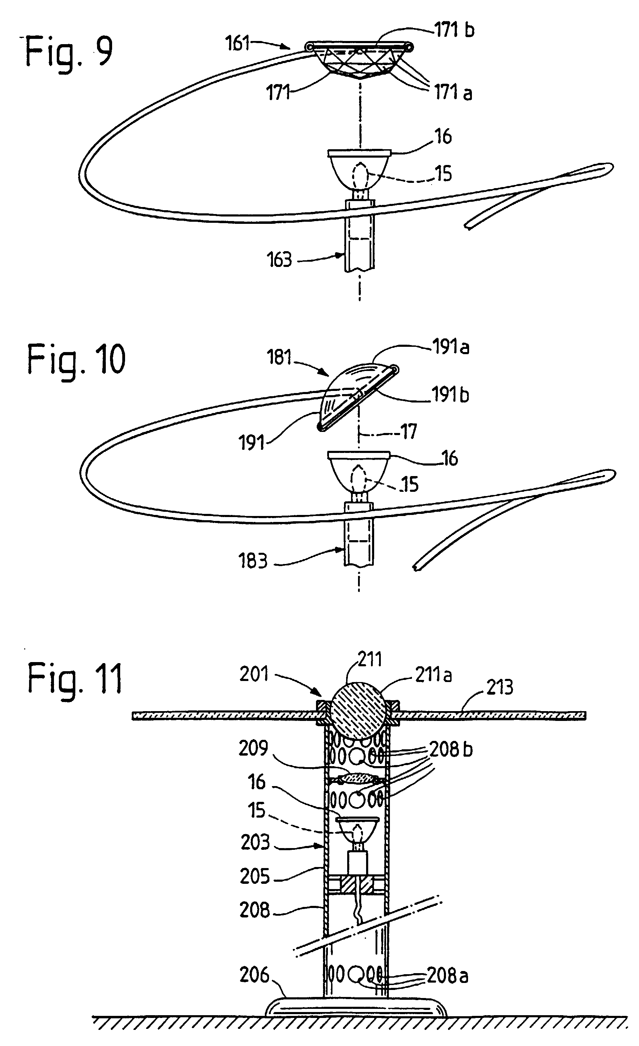

Die in der Fig. 9 ersichtliche Leuchte 161 hat Haltemittel 163 und einen Lichtverteiler 171. Dieser besteht aus einem unregelmässigen Polyeder und hat näherungsweise die Form eines Kugelabschnitts, dessen gebogene, der Lichtquelle 15 zugewandte Fläche durch eine Anzahl ebene, kleine dreieckige oder viereckige Flächen 171a ersetzt ist, die zusammen eine einen Teil einer Kugelfläche bildende Hüllfläche definieren. Die Flächen 171a sind mindestens zum Teil durch eine zur Interferenzerzeugung dienende Schicht gebildet, während die vom Kugelabschnitt verbliebene, ebene, der Lichtquelle abgewandte Fläche 171b durch eine unbeschichtete Fläche des Glaskörpers gebildet ist.

Die in der Fig. 10 ersichtliche Leuchte 181 besitzt Haltemittel 183 und einen Lichtverteiler 191. Dieser hat die Form eines Kugelabschnitts. Die Oberfläche des Lichtverteilers 191 hat dementsprechend eine konvex gebogene Fläche 191a und eine ebene Fläche 191b. Die letztere ist der Lichtquelle 15 zugewandt und bildet mit der Achse 17 einen von 90° verschiedenen, spitzen Winkel. Die der Lichtquelle zugewandte, ebene Fläche 191b oder eventuell die gebogene Fläche 191a ist mit einer lichtdurchlässigen, zur Interferenzerzeugung dienenden Schicht versehen.

Die Haltemittel der in den Figuren 4 bis 10 gezeichneten Leuchten sind zum beispiel weitgehend ähnlich ausgebildet wie die Haltemittel 3 der in den Figuren 1 bis 3 gezeichneten Leuchten.

Die Fig. 11 zeigt eine Leuchte 201, die in einen Tisch integriert ist bzw. einen Teil eines solchen bildet. Die haltemittel 203 der Leuchte 201 weisen einen Support 205 auf, der einen auf dem Boden eines Raumes stehenden Ständer bildet und einen Sockel 206 sowie ein vertikales, hohles Rohr 208 aufweist. Dieses hat in der Nähe seiner unteren Endes mindestens einen Kranz von Löchern 208a und in der Nähe seines oberen Endes mindestens einen Kranz von Löchern 208b.

Das Rohr 208 enthält eine Lichtquelle 15, einen Hohlspiegel 16 und eine Sammel-Linse 209. beim oberen, offenen Ende des Rohrs 208 ist ein Lichtverteiler 211 im Rohr betestigt. Der Lichtverteiler 211 ist beispielsweise im wesentlichen kugelförmig, wobei ungefähr die Hälfte des Lichtverteilers aus dem Rohr herausragt. Der sich innerhalb des Rohrs befindende Teil der Oberfläche 211a des Lichtverteilers ist durch eine zur Interferenzerzeugung dienende Schicht gebildet. Der Hohlspiegel 16 und die Sammel-Linse 209 bilden Kollimationsmittel zum Kollimieren des von der Lichtquelle 15 gegen den Lichtverteiler 211 gestrahlten Lichts. Am oberen Ende des Rohrs 208 ist ferner ein kreisförmiges und mindestens zum grössten Teil lichtdurchlässiges, zum Beispiel aus farblosem, klarem Glas bestehendes Tischblatt 213 befestigt. Das Tischblatt 213 befindet sich also ungefähr in der Höhe des Lichtverteilers 211 und umschliesst diesen in einer vertikalen Projektion allseitig.

Beim Betrieb der Lichtquelle wird Licht durch den Lichtverteiler 211 hindurch oben aus dem Rohr 208 herausgestrahlt. Ferner kann auch noch Licht durch die oberen Löcher 208b hindurch aus dem Rohr heraus und eventuell durch das Tischblatt hindurch gestrahlt werden. Die Lichtquelle 15 und die Sammel-Linse 209 sind derart befestigt, dass sich im Rohr ein von den Löchern 208a bis zu den Löchern 208b erstreckender, zusammenhängender, freier Durchgang vorhanden ist. Beim Betrieb der Lichtquelle kann sich daher im Rohr 208 eine Konvektionsströmung ausbilden, welche einen Teil der von der Lichtquelle erzeugten Wärme in die Umgebung abführt.

Die Leuchten können noch auf andere Arten geändert werden. Zum Beispiel kann das Rohr 9 verstellbar und in verschiedenen Höhen fixierbar mit dem Rohr 8 verbunden werden. Ferner kann der Support 5 derart ausgebildet werden, dass er statt auf einem Fussboden auf einem Tisch oder dergleichen aufgestellt oder an einer Wand oder Decke befestigt werden kann. Des weiteren kann das Verbindungselement 19 bzw. 59 bzw. 89 derart geändert werden, dass es den Lichtverteiler nur federnd und nicht verstellbar oder nur verstellbar und nicht federnd oder starr und weder federnd noch verstellbar mit dem Support verbindet.

Die Lichtquelle 15 könnte eventuell statt aus einer Halogenglühlampe aus einer Glühlampe ohne Halogengasfüllung oder aus einer Gasentladungslampe, zum Beispiel einer Leuchtröhre bestehen. Im letzteren Fall könnte der zu einer Achse rotationssymmetrische Hohlspiegel durch einen länglichen, rinnenförmigen Hohlspiegel oder Reflektor ersetzt werden.

Die Seitenfläche 31e des Lichtverteilers 31 könnte mit der Grundfläche 31a anstelle eines rechten Winkels einen spitzen oder stumpfen Winkel bilden.

Ferner kann man noch andere polyederförmige Lichtverteiler mit mindestens zwei miteinander einen Winkel bildenden Flächen vorsehen, die beim Betrieb der Lichtquelle von der Aussenseite bzw. Umgebung des Lichtverteilers her und/oder durch dessen Glaskörper hindurch mit von der Lichtquelle erzeugtem Licht bestrahlt werden und/oder bei denen von der Lichtquelle erzeugtes und vom Lichtverteiler mindestens zum Teil in Strahlen mit verschiedenen Farben zerlegtes Licht in die Umgebung abgestrahlt wird. Der Lichtverteiler besitzt dabei vorzugsweise mindestens drei oder sogar mindestens vier zum Bestrahlen mit Licht und/oder Abstrahlen von Licht bestimmte Flächen, die mindestens paarweise miteinander einen Winkel bilden oder von denen sogar jede Fläche mit jeder anderen Fläche einen Winkel bildet. Der Lichtverteiler hat dann wie die anhand der Figuren 1 bis 6, 9 beschriebenen Lichtverteiler mindestens eine und vorzugsweise mindestens zwei oder mindestens drei Flächen mit einer Schicht, die das von aussen und/oder innen auf sie gestrahlte Licht teilweise reflektiert sowie teilweise passieren lässt und Interferenzen erzeugt. Man kann zum Beispiel einen Lichtverteiler bilden, indem von einem Würfel derart alle Ecken abgeschnitten werden, dass ein Polyeder mit sechs quadratförmigen und acht dreieckförmigen Flächen entsteht.

Des weiteren kann man Merkmale von verschiedenen, vorgängig beschriebenen Leuchten miteinander kombinieren. Dabei können auch Formelemente der verschiedenen Lichtverteiler miteinander kombiniert werden. Man kann beispielsweise einen Lichtverteiler vorsehen, dessen einer Teil polyederförmig, zum Beispiel pyramidenförmig und dessen anderer Teil etwa wie die in den Figuren 8 sowie 10 gezeichneten Lichtverteiler die Form eines Kugelabschnitts hat.

Des weiteren kann man einen teilweise durch eine zylindrische Fläche begrenzten Lichtverteiler vorsehen. Dabei kann zum Beispiel bei einem teilweise zylindrischen Lichtverteiler mindestens ein Teil der zylindrischen Fläche durch eine zur Zylinderachse parallele, ebene Fläche ersetzt und/oder mindestens an einem Ende des Lichtverteilers mindestens eine gegen die Zylinderachse geneigte, ebene Fläche vorhanden sein.

Wie schon erwähnt, kann ein Lichtverteiler mit einem durch Pressen hergestellten Glaskörper eventuell herstellungsbedingt mindestens eine leicht konkav gebogene Fläche aufweisen. Man kann jedoch auch einen Lichtverteiler herstellen bei dem mindestens eine zum Bestrahlen mit Licht von aussen her und/oder zum Abstrahlen von Licht bestimmte Fläche absichtlich mehr oder weniger stark konkav gebogen ist. Die Ränder der bzw. jeder gebogenen Fläche können dann zum Beispiel ebene Schmiegeflächen definieren, die zusammen ein Polyeder bilden.

Ferner könnte man einen Lichtverteiler vorsehen, der mindestens eine mit einer Schicht versehene Fläche besitzt, die eine reflektierende, lichtundurchlässige, metallische Teil-Schicht oder Lage und zwischen dieser und dem Glaskörper mindestens eine Teil-Schicht oder Lage aus einem dielektrischen, lichtdurchlässigen Material und zum Beispiel mehrere, aus zwei oder mehr verschiedenen, dielektrischen Materialien bestehende Teil-Schichten oder Lagen aufweist. Eine mit einer solchen Schicht belegte und durch die metallischen Teil-Schicht oder Lage verspiegelte Fläche wird dann derart angeordnet, dass von der Lichtquelle erzeugtes Licht, das durch mindestens eine andere Fläche des Lichtverteilers in diesen hineingestrahlt wird, zur verspiegelten Fläche gelangt, bei dieser durch Interferenz in verschiedenfarbiges Licht zerlegt und mindestens annähernd vollständig durch den Glaskörper hindurch zu mindestens einer anderen Fläche des Lichtverteilers reflektiert und durch diese aus dem Lichtverteiler herausgestrahlt wird. Man könnte zum Beispiel die Seitenfläche 31e bzw. 71e des Lichtverteilers 31 bzw. 71 und die Flächen 91a, 91b des Lichtverteilers 91 mit einer Schicht verspiegeln. Eine solche verspiegelte Fläche bewirkt dann in Kombination mit mindestens einer anderen, vorzugsweise mit ihr einen Winkel bildenden, beschichteten oder unbeschichteten Fläche, dass das vom Lichtverteiler abgestrahlte Licht mindestens zum Teil abhängig von der Abstrahlungsstelle und der Abstrahlungsrichtung verschiedene Farben hat.

Des weiteren könnte möglicherweise im wesentlichen die gesamten Oberfläche des Glaskörpers des Lichtverteilers mit einer lichtdurchlässigen, zur Erzeugung von Interferenzfarben dienende Schicht oder mit teils lichtdurchlässigen und teils lichtundurchlässigen, eine Verspiegelung ergebenden Schichten überzogen sein.

## Patentansprüche

1. Leuchte mit Haltemitteln (3, 53, 83, 103, 123, 143, 163, 183, 203) zum Halten einer künstlichen Lichtquelle (15) und mit einem von den Haltemitteln (3, 53, 83, 103 123, 143, 163, 183, 203) gehaltenen Lichtverteiler (31, 71, 91, 111, 131, 151, 171, 191, 211), der einen Körper aus lichtdurchlässigem Material mit einer Oberfläche aufweist und zum Bestrahlen mit von der Lichtquelle (15) erzeugtem Licht sowie zum Abstrahlen von Licht in seine Umgebung angeordnet ist, wobei der Lichtverteiler (31, 71, 91, 111, 131, 151, 171, 191, 211) ausgebildet und angeordnet ist, um derart Licht abzustrahlen, dass mindestens ein Teil des abgestrahlten Lichts verschiedene, von seiner Richtung abhängige Farben hat,
dadurch gekennzeichnet, dass mindestens ein Abschnitt der Oberfläche des Körpers mit einer Schicht aus mindestens einem vom Material des Körpers verschiedenen Material überzogen ist und dass die bzw. mindestens eine Schicht ausgebildet ist, um bei ihrer Bestrahlung mit Licht die Farbe von diesem abhängig von der Richtung des Lichts zu beeinflussen.

2. Leuchte nach Anspruch 1, dadurch gekennzeichnet, dass die bzw. mindestens eine Schicht ausgebildet ist, um bei ihrer Bestrahlung mit Licht von der Umgebung oder vom Innern des Lichtverteilers (31, 71, 91, 111, 131, 151, 171, 191, 211) her durch Interferenzen von der Richtung des Lichts abhängige Farben zu erzeugen.

3. Leuchte nach Anspruch 1 oder 2, dadurch gekennzeichnet, dass der lichtdurchlässige Körper einstückig ist und aus farblosem, mineralischem Glas besteht.

4. Leuchte nach einem der Ansprüche 1 bis 3, daaurch gekennzeichnet, dass die bzw. mindestens eine Schicht lichtdurchlässig ist.

5. Leuchte nach Anspruch 4, dadurch gekennzeichnet, dass die bzw. jede lichtdurchlässige Schicht mindestens zwei aus verschiedenen, dielektrischen, unterschiedliche Brechungsindizes aufweisenden Materialien bestehende Lagen aufweist, wobei zum Beispiel aus verschiedenen Oxiden bestehende Lagen vorhanden sind und wobei jede Lage vorzugsweise höchstens 0,005 mm sowie zum Beispiel höchstens 0,001 mm dick ist.

6. Leuchte nach einem der Ansprüche 1 bis 5, dadurch gekennzeichnet, dass mindestens ein Abschnitt der Oberfläche (131a, 211a) des Lichtverteilers (31, 71, 91, 111, 131, 151, 171, 191, 211) durch einen unbeschichteten Abschnitt des lichtdurchlässigen Körpers gebildet ist.

7. Leuchte nach einem der Ansprüche 1 bis 6, dadurch gekennzeichnet, dass die Schicht bzw. mindestens eine der Schichten auf einem Oberflächenabschnitt des Körpers angeordnet ist, der mit mindestens einem anderen, zur Bestrahlung durch die Lichtquelle (15) oder zum Abstrahlen von Licht angeordneten Oberflächenabschnitt des Körpers einen Winkel bildet.

8. Leuchte nach einem der Ansprüche 1 bis 7, dadurch gekennzeichnet, dass die bzw. mindestens eine Schicht angeordnet und ausgebildet ist, um von der Lichtquelle (15) erzeugtes, von der Aussenseite des Lichtverteilers (31, 71, 91, 111, 131, 151, 171, 191, 211) her auf sie gestrahltes Licht teilweise zu reflektieren und teilweise passieren zu lassen.

9. Leuchte nach einem der Ansprüche 1 bis 8, dadurch gekennzeichnet, dass der Lichtverteiler (31, 71, 91, 111, 171) mindestens zwei im wesentlichen ebene, zur Bestrahlung durch die Lichtquelle (15) von der Umgebung des Lichtverteilers (31, 71, 91, 111, 171) her angeordnete, miteinander einen Winkel bildende Flächen (31b, 31c, 31d, 71c, 71d, 171a) aufweist, die mit einer Schicht versehen sind, die ausgebildet ist, um von aussen her auf sie gestrahltes Licht teilweise zu reflektieren und teilweise passieren zu lassen, und die mit einer zum Anordnen auf der der Lichtquelle (15) abgewandten Seite bestimmten, ebenen Fläche (31a, 71a, 171b) einen im Innern des Körpers gemessenen, spitzen Winkel bilden, der vorzugsweise mindestens 10°, vorzugsweise höchstens 80° und zum Beispiel 30° bis 60° beträgt.

10. Leuchte nach einem der Ansprüche 1 bis 9, dadurch gekennzeichnet, dass der Lichtverteiler (31. 71, 91, 111, 171) im wesentlichen polyederförmig ist und mindestens zwei miteinander einen Winkel bildende Flächen (31b, 31c, 31d, 71b, 71c, 71d, 171a) des Lichtverteilers (31. 71, 91, 111, 171) zur Bestrahlung von aussen mit von der Lichtquelle (15) erzeugtem Licht angeordnet sind.

11. Leuchte nach einem der Ansprüche 1 bis 10, dadurch gekennzeichnet, dass der Lichtverteiler (31. 71, 91, 111, 171) im wesentlichen ein konvexes Polyeder bildet.

12. Leuchte nach einem der Ansprüche 1 bis 11, dadurch gekennzeichnet, dass der Lichtverteiler (31, 71) im wesentlichen pyramidenförmig ist und eine Grundfläche (31a, 71a) sowie Seitenflächen (31b, 31c, 31d, 31e, 71b, 71c, 71d, 71e) hat, dass mindestens zwei Seitenflächen (31b, 31c, 31d, 71b, 71c, 71d) zur Bestrahlung von aussen mit von der Lichtquelle (15) erzeugtem Licht angeordnet sind und dass die Grundfläche (31a, 71a) zur Anordnung auf der der Lichtquelle (15) abgewandten Seite des Lichtverteilers (31, 71) bestimmt ist.

13. Leuchte nach Anspruch 12, dadurch gekennzeichnet, dass der Lichtverteiler (31) eine rechteckförmige Grundfläche (31a), drei mit dieser einen im Innern des Körpers gemessenen, spitzen Winkel bildende Seitenflächen (31b, 31c, 31d) und eine entlang von einem der längeren Ränder der Grundfläche (31a) verlaufende, mit dieser einen im Innern des Körpers gemessenen, rechten oder stumpfen Winkel bildende Seitenfläche (31e) hat, dass mindestens zwei mit der Grundfläche (31a) einen im Innern des Körpers gemessenen, spitzen Winkel bildende Seitenflächen (31b, 31c, 31d) zur Bestrahlung mit von der Lichtquelle (15) erzeugtem Licht von aussen her angeordnet und mit einer Schicht überzogen sind, die ausgebildet ist, um von aussen her zu ihr gestrahltes Licht teilweise zu reflektieren und teilweise passieren zu lassen.

14. Leuchte nach einem der Ansprüche 1 bis 9, dadurch gekennzeichnet, dass der Lichtverteiler (131, 151, 191, 211) mindestens eine gebogene Fläche (131a, 151a, 191a, 211a) aufweist.

15. Leuchte nach Anspruch 14, dadurch gekennzeichnet, dass die Schicht bzw. mindestens eine der Schichten bei der bzw. einer gebogenen Fläche (131a, 151a, 191a, 211a) des Lichtverteilers (131, 151, 191, 211) angeordnet ist.

16. Leuchte nach Anspruch 14 oder 15, dadurch gekennzeichnet, dass mindestens ein Abschnitt der bzw. einer gebogenen Fläche (131a, 151a, 211a) zur Bestrahlung von aussen mit von der Lichtquelle (15) erzeugtem Licht angeordnet ist.

17. Leuchte nach einem der Ansprüche 1 bis 16, dadurch gekennzeichnet, dass Kollimationsmittel zum Kollimieren des von der Lichtquelle (15) gegen den Lichtverteiler (31, 71, 91, 111, 131, 151, 171, 191, 211) gestrahlten Lichtes vorhanden sind, so dass dieses Licht ein Lichtbüschel (35) mit einer Strahlungsmittelachse bildet.

18. Leuchte nach Anspruch 17, dadurch gekennzeichnet, dass die Lichtquelle (15) eine Halogenglühlampe aufweist und dass die Kollimationsmittel einen Hohlspiegel (16) aufweisen, um das von der Lichtquelle (15) erzeugte Licht um die Strahlungsmittelachse herum zu kollimieren.

19. Leuchte nach Anspruch 17 oder 18, dadurch gekennzeichnet, dass der Lichtverteiler (31, 71, 91, 111, 131, 151, 171, 191, 211) mindestens einen von aussen her mit von der Lichtquelle (15) herkommenden Licht bestrahlbaren Flächenabschnitt aufweist, der mit der Strahlungsmittelachse einen von 90° verschiedenen Winkel bildet.

20. Leuchte nach einem der Ansprüche 1 bis 19, dadurch gekennzeichnet, dass die Haltemittel (3, 53, 83, 105, 123, 143, 163, 183) einen Support (5) mit einer zum Halten der Lichtquelle (15) dienenden Halterung (11) aufweisen und dass der Lichtverteiler (31, 71, 91) federnd und/oder verstellbar mit dem Support (5) verbunden ist.

21. Leuchte nach einem der Ansprüche 1 bis 20, dadurch gekennzeichnet, dass ein im wesentlichen horizontales Tischblatt (213) an den Haltemitteln (203) befestigt ist und dass das Tischblatt (213) sich ungefähr in der Höhe des Lichtverteilers (211) befindet und diesen in einer vertikalen Projektion allseitig umschliesst, wobei das Tischblatt (213) vorzugsweise mindestens zum Teil lichtdurchlässig ist.

22. Leute nach einem der Ansprüche 1 bis 21, dadurch gekennzeichnet, dass die bzw. mindestens eine Schicht ausgebildet ist, um Licht mit Farben zu erzeugen, die von denjenigen Richtungen abhängig sind, in denen das Licht zur Schicht gestrahlt wird.

## Claims

1. Lamp comprising supporting means (3, 53, 83, 103, 123, 143, 163, 183, 203) for holding an artificial light source (15) and comprising a light diffuser (31, 71, 91, 111, 131, 151, 171, 191, 211) which is held by the supporting means (3, 53, 83, 103, 123, 143, 163, 183, 203), has a body of transparent material with a surface and is arranged for irradiating with light generated by the light source (15) and for radiating light into its environment, the light diffuser (31, 71, 91, 111, 131, 151, 171, 191, 211) being formed and being arranged to radiate light in a manner such that at least a part of the light radiated has different colours depending on its direction, characterized in that at least a section of the surface of the body is provided with a coating of at least one material differing from the material of the body, and that the or at least one coat is formed so that when it is irradiated with light, it influences the colour of said light depending on the direction of the light.

2. Lamp according to Claim 1, characterized in that the or at least one coat is formed so that, when it is irradiated with light from the environment or from the interior of the light diffuser (31, 71, 91, 111, 131, 151, 171, 191, 211), it produces, by interference, colours dependent on the direction of the light.

3. Lamp according to Claim 1 or 2, characterized in that the transparent body is a single piece and consists of colourless, mineral glass.

4. Lamp according to any of Claims 1 to 3, characterized in that the or at least one coat is transparent.

5. Lamp according to Claim 4, characterized in that the or each transparent coat has at least two layers consisting of different, dielectric materials having different refractive indices, layers consisting of, for example, different oxides being present and each layer preferably having a thickness of not more than 0.005 mm and, for example, not more than 0.001 mm.

6. Lamp according to any of Claims 1 to 5, characterized in that at least one section of the surface (131a, 211a) of the light diffuser (31, 71, 91, 111, 131, 151, 171, 191, 211) is formed by an uncoated section of the transparent body.

7. Lamp according to any of Claims 1 to 6, characterized in that the coat or at least one of the coats is arranged on a surface section of the body which makes an angle with at least one other surface section of the body which is arranged for irradiation by the light source (15) or for radiating light.

8. Lamp according to any of Claims 1 to 7, characterized in that the or at least one coat is arranged and is formed partly to reflect and partly to transmit light produced by the light source (15) and radiated onto it from the outside of the light diffuser (31, 71, 91, 111, 131, 151, 171, 191, 211).

9. Lamp according to any of Claims 1 to 8, characterized in that the light diffuser (31, 71, 91, 111, 171) has at least two essentially flat surfaces (31b, 31c, 31d, 71c, 71d, 171a) which are arranged for irradiation by the light source (15) from the environment of the light diffuser (31, 71, 91, 111, 171), make an angle with one another, are provided with a coat which is formed for partly reflecting and partly transmitting light radiated onto them from the outside and make, with the flat surface (31a, 71a, 171b) intended for arranging on the side facing away from the light source (15), an acute angle which is measured in the interior of the body and is preferably at least 10°, preferably not more than 80°, for example 30° to 60°.

10. Lamp according to any of Claims 1 to 9, characterized in that the light diffuser (31, 71, 91, 111, 171) is essentially polyhedral, and at least two surfaces (31b, 31c, 31d, 71b, 71c, 71d, 171a) of the light diffuser (31, 71, 91, 111), which surfaces make an angle with one another, are arranged for irradiation from outside with light produced by the light source (15).

11. Lamp according to any of Claims 1 to 10, characterized in that the light diffuser (31, 71, 91, 111, 171) essentially forms a convex polyhedron.

12. Lamp according to any of Claims 1 to 11, characterized in that the light diffuser (31, 71) is essentially pyramidal and has a base surface (31a, 71a) and lateral surfaces (31b, 31c, 31d, 31e, 71b, 71c, 71d, 71e) and at least two lateral surfaces (31b, 31c, 31d, 71b, 71c, 71d) are arranged for irradiation from outside with light produced by the light source (15), and that the base surface (31a, 71a) is intended for arranging on that side of the light diffuser (31, 71) which faces away from the light source (15).

13. Lamp according to Claim 12, characterized in that the light diffuser (31) has a rectangular base surface (31a), three lateral surfaces (31b, 31c, 31d) making with said base surface an acute angle, measured in the interior of the body, and a lateral surface (31e) which runs along one of the longer edges of the base surface (31a) and makes a right angle or obtuse angle with said base surface, measured in the interior of the body, and that at least two lateral surfaces (31b, 31c, 31d) making an acute angle, measured in the interior of the body, with the base surface (31a) are arranged for irradiation from the outside with light produced by the light source (15) and are provided with a coat which is formed for partly reflecting and partly transmitting light radiated to it from the outside.

14. Lamp according to any of Claims 1 to 9, characterized in that the light diffuser (131, 151, 191, 211) has at least one curved surface (131a, 151a, 191a, 211a).

15. Lamp according to Claim 14, characterized in that the coat or at least one of the coats is arranged on the or one curved surface (131a, 151a, 191a, 211a) of the light diffuser (131, 151, 191, 211).

16. Lamp according to Claim 14 or 15, characterized in that at least one section of the or of a curved surface (131a, 151a, 211a) is arranged for irradiation from outside with light produced by the light source (15).

17. Lamp according to any of Claims 1 to 16, characterized in that collimation means for collimating the light radiated from the light source (15) to the light diffuser (31, 71, 91, 111, 131, 151, 171, 191, 211) are present, so that this light forms a light beam (35) having a central beam axis.

18. Lamp according to Claim 17, characterized in that the light source (15) has an incandescent halogen lamp and that the collimation means have a hollow mirror (16) for collimating the light produced by the light source (15) around the central beam axis.

19. Lamp according to Claim 17 or 18, characterized in that the light diffuser (31, 71, 91, 111, 131, 151, 171, 191, 211) has at least one surface section which can be irradiated from the outside with the light arriving from the light source (15) and which makes an angle other than 90° with the central beam axis.

20. Lamp according to any of Claims 1 to 19, characterized in that the supporting means (3, 53, 83, 105, 123, 143, 163, 183) have a support (5) comprising a holder (11) serving for holding the light source (15), and that the light diffuser (31, 71, 91) is spring-mounted on and/or adjustably connected to the support (5).

21. Lamp according to any of Claims 1 to 20, characterized in that an essentially horizontal table top (213) is fastened to the supporting means (203) and that the table top (213) is located approximately at the height of the light diffuser (211) and encloses the latter all-round in a vertical projection, the table top (213) preferably being at least partly transparent.

22. Lamp according to any of Claims 1 to 21, characterized in that the or at least one coat is formed for producing light having colours which are dependent on the directions in which the light is radiated towards the coat.

## Revendications

1. Lampe avec des moyens de support (3, 53, 83, 103, 123, 143, 163, 183, 203) pour supporter une source de lumière artificielle (15) et avec un diffuseur de lumière (31, 71, 91, 111, 131, 151, 171, 191, 211) supporté par les moyens de support (3, 53, 83, 103, 123, 143, 163, 183, 203) qui présente un corps fabriqué dans un matériau transparent à la lumière avec une surface et qui est arrangé pour être éclairé par la lumière produite par la source de lumière (15) et pour diffuser la lumière dans son environnement, le diffuseur de lumière (31, 71, 91, 111, 131, 151, 171, 191, 211) étant ce faisant conçu et disposé de façon à diffuser la lumière de telle sorte qu'au moins une partie de la lumière diffusée présente des couleurs différentes en fonction de sa direction, caractérisée en ce qu'au moins un segment de la surface du corps est recouvert d'une couche composée d'au moins un matériau différent du matériau du corps et en ce que la couche, ou, selon les cas, au moins une couche, est conçue pour influencer la couleur de la lumière lorsque celle-ci l'éclaire, en fonction de la direction de la lumière.

2. Lampe selon la revendication 1, caractérisée en ce que la couche, ou, selon les cas, au moins une couche, est conçue pour générer, lorsqu'elle est éclairée par la lumière, des couleurs qui sont fonction de la direction de la lumière, du fait d'interférences, de l'environnement ou de l'intérieur du diffuseur de lumière (31, 71, 91, 111, 131, 151, 171, 191, 211).

3. Lampe selon la revendication 1 ou 2, caractérisée en ce que le corps transparent à la lumière est conçu d'un seul tenant et est fabriqué dans un verre minéral incolore.

4. Lampe selon l'une des revendications 1 à 3, caractérisée en ce que la couche ou, selon les cas, au moins une couche, est transparente à la lumière.

5. Lampe selon la revendication 4, caractérisée en ce que la couche, ou, selon les cas, chaque couche transparente à la lumière comporte au moins deux couches composées de matériaux diélectriques, différents et présentant divers indices de réfraction, des couches composées de divers oxydes étant présentes par exemple, chaque couche présentant de préférence une épaisseur de 0,005 mm au plus, comme par exemple de 0,001 mm au plus.

6. Lampe selon l'une des revendications 1 à 5, caractérisée en ce qu'au moins un segment de la surface (131a, 211a) du diffuseur de lumière (31, 71, 91, 111, 131, 151, 171, 191, 211) est conçu par un segment non revêtu du corps transparent à la lumière.

7. Lampe selon l'une des revendications 1 à 6, caractérisée en ce que la couche, ou, selon les cas, au moins l'une des couches, est disposée sur un segment de surface du corps, qui forme un angle avec au moins un autre segment de surface du corps prévu pour être éclairé par la source de lumière (15) ou pour diffuser la lumière.

8. Lampe selon l'une des revendications 1 à 7, caractérisée en ce que la couche, ou, selon les cas, au moins une couche, est prévue et conçue pour réfléchir partiellement et pour laisser passer partiellement la lumière produite par la source de lumière (15) et rayonnant depuis la face extérieure du diffuseur de lumière (31, 71, 91, 111, 131, 151, 171, 191, 211) sur celle-ci.

9. Lampe selon l'une des revendications 1 à 8, caractérisée en ce que le diffuseur de lumière (31, 71, 91, 111, 171) comporte au moins deux surfaces (31b, 31c, 31d, 71c, 71d, 171a), essentiellement planes, prévues pour éclairer via la source de lumière (15) depuis l'environnement du diffuseur de lumière (31, 71, 91, 111, 171) et formant réciproquement un angle, qui sont pourvues d'une couche, qui est conçue de façon à réfléchir partiellement et à laisser passer partiellement la lumière rayonnant sur celle-ci de l'extérieur, et qui forment un angle aigu mesuré à l'intérieur du corps avec une surface plane (31a, 71a, 171b) définie pour être disposée sur la face opposée à la source de lumière (15), lequel est de préférence au moins égal à 10 °, de préférence de 80 ° au plus, et par exemple compris entre 30 ° et 60 °.

10. Lampe selon l'une des revendications 1 à 9, caractérisée en ce que le diffuseur de lumière (31, 71, 91, 111, 171) est pour l'essentiel de forme polyédrique et comporte au moins deux surfaces formant réciproquement un angle (31b, 31c, 31d, 71b, 71c, 71d, 171a) du diffuseur de lumière (31, 71, 91, 111, 171) pour être éclairées de l'extérieur avec la lumière produite par la source de lumière (15).

11. Lampe selon l'une des revendications 1 à 10, caractérisée en ce que le diffuseur de lumière (31, 71, 91, 111, 171) forme un polyèdre essentiellement convexe.

12. Lampe selon l'une des revendications 1 à 11, caractérisée en ce que le diffuseur de lumière (31, 71) est essentiellement de forme pyramidale et comporte une surface de base (31a, 71a) et des surfaces latérales (31 b, 31c, 31d, 31e, 71 b, 71 c, 71d, 71e), en ce qu'au moins deux surfaces latérales (31b, 31c, 31 d, 71b, 71c, 71d) sont prévues pour être éclairées de l'extérieur par la lumière produite par la source de lumière (15) et en ce que la surface de base (31a, 71a) est définie pour être disposée sur la face du diffuseur de lumière (31, 71) opposée à la source de lumière (15).

13. Lampe selon la revendication 12, caractérisée en ce que le diffuseur de lumière (31) comporte une surface de base de forme rectangulaire (31a), trois surfaces latérales (31b, 31c, 31d) formant avec celle-ci un angle aigu mesuré à l'intérieur du corps et une surface latérale (31e) s'étendant le long de l'un des bords longs de la surface de base (31a) et formant avec celle-ci un angle droit ou obtus mesuré à l'intérieur du corps, en ce qu'au moins deux surfaces latérales (31b, 31c, 31d), formant avec la surface de base (31a) un angle aigu mesuré à l'intérieur du corps sont prévues pour être éclairées de l'extérieur par la lumière produite par la source de lumière (15) et sont revêtues d'une couche, qui est conçue de façon à réfléchir partiellement et à laisser passer partiellement la lumière rayonnant de l'extérieur sur elle.

14. Lampe selon l'une des revendications 1 à 9, caractérisée en ce que le diffuseur de lumière (131, 151, 191, 211) comporte au moins une surface courbe (131a, 151a, 191a, 211a).

15. Lampe selon la revendication 14, caractérisée en ce que la couche ou, selon les cas, au moins l'une des couches, est prévue dans le cas de la surface ou, selon les cas, d'une surface courbe (131a, 151a, 191a, 211 a) du diffuseur de lumière (131, 151, 191, 211).

16. Lampe selon la revendication 14 ou 15, caractérisée en ce qu'au moins un segment de la ou, selon les cas, d'une surface courbe (131a, 151a, 211a) est prévu pour être éclairées de l'extérieur via la lumière produite par la source de lumière (15).

17. Lampe selon l'une des revendications 1 à 16, caractérisée en ce que des moyens de collimation sont prévus pour la collimation de la lumière rayonnant de la source de lumière (15) contre le diffuseur de lumière (31, 71, 91, 111, 131, 151, 171, 191, 211), de telle sorte que cette lumière forme un faisceau lumineux (35) avec un axe central de rayonnement.

18. Lampe selon la revendication 17, caractérisée en ce que la source de lumière (15) comporte une lampe halogène et en ce que les moyens de collimation comportent un miroir concave (16) pour la collimation de la lumière produite par la source de lumière (15) tout autour de l'axe central de rayonnement.

19. Lampe selon la revendication 17 ou 18, caractérisée en ce que le diffuseur de lumière (31, 71, 91, 111, 131, 151, 171, 191, 211) comporte au moins un segment de surface pouvant être éclairé de l'extérieur via la lumière provenant de la source de lumière (15), qui forme avec l'axe central de rayonnement un angle différent de 90 °.

20. Lampe selon l'une des revendications 1 à 19, caractérisée en ce que les moyens de support (3, 53, 83, 103, 123, 143, 163, 183) comportent un élément porteur (5) avec une fixation (11) servant à supporter la source de lumière (15) et en ce que le diffuseur de lumière (31, 71, 91) est relié à l'élément porteur (5) de façon élastique et/ou ajustable.

21. Lampe selon l'une des revendications 1 à 20, caractérisée en ce qu'une tablette essentiellement horizontale (213) est fixée aux moyens de support (203) et en ce que la tablette (213) se trouve à peu près à hauteur du diffuseur de lumière (211) et entoure celui-ci de tous côtés dans une projection verticale, la tablette (213) étant de préférence transparente à la lumière, au moins pour partie.

22. Lampe selon l'une des revendications 1 à 21, caractérisée en ce que la couche, ou, selon les cas, au moins une couche, est formée pour produire de la lumière avec des couleurs qui sont fonction des directions dans lesquelles la lumière rayonne en direction de la couche.
